# EUROPÄISCHE PATENTSCHRIFT

(11) **EP 1 575 380 B1**
(45) Veröffentlichungstag und Bekanntmachung des Hinweises auf die Patenterteilung: **10.09.2008**
(21) Anmeldenummer: 03813117.3
(22) Anmeldetag: 12.12.2003
(51) Int. Cl.: A23L 1/317, A23L 1/314

(54) **COFFEIN-HALTIGE FLEISCHWARE**
MEAT PRODUCTS COMPRISING CAFFEINE
PRODUIT A BASE DE VIANDE CONTENANT DE LA CAFEINE

(30) Priorität: 13.12.2002 DE 10258464; 15.07.2003 DE 10332128
(43) Veröffentlichungstag der Anmeldung: 21.09.2005
(73) Patentinhaber: Drexel, Hans, 86381 Krumbach (DE)
(72) Erfinder: Drexel, Hans, 86381 Krumbach (DE)
(74) Vertreter: Dey, Michael
(86) Internationale Anmeldenummer: PCT/EP2003/014144
(87) Internationale Veröffentlichungsnummer: WO 2004/054387

(56) Entgegenhaltungen:
- WO-A-00/59319
- WO-A-01/62107
- DE-U- 20 205 856
- US-A- 4 844 925
- DATABASE WPI Section Ch, Week 200368 Derwent Publications Ltd., London, GB; Class B04, AN 2003-718439 XP002277716 & KR 2002 042 794 A (MANIKER CO LTD), 7. Juni 2002 (2002-06-07)
- PATENT ABSTRACTS OF JAPAN vol. 004, no. 098 (C-018), 15. Juli 1980 (1980-07-15) -& JP 55 061781 A (OKAMURA KAZUHIRO), 9. Mai 1980 (1980-05-09)
- PATENT ABSTRACTS OF JAPAN vol. 005, no. 075 (C-055), 19. Mai 1981 (1981-05-19) -& JP 56 023866 A (MURAMOTO MASATO), 6. März 1981 (1981-03-06)
- DATABASE WPI Section Ch, Week 200173 Derwent Publications Ltd., London, GB; Class D12, AN 2001-636692 XP002277717 & KR 2001 044 230 A (JUNG C), 5. Juni 2001 (2001-06-05)
- PATENT ABSTRACTS OF JAPAN vol. 1997, no. 08, 29. August 1997 (1997-08-29) -& JP 09 098740 A (TAIYO KAGAKU CO LTD), 15. April 1997 (1997-04-15)
- DATABASE WPI Section Ch, Week 199324 Derwent Publications Ltd., London, GB; Class D12, AN 1993-194892 XP002277718 -& SU 1 741 745 A (STAVROPOL POLY), 23. Juni 1992 (1992-06-23)
- PATENT ABSTRACTS OF JAPAN vol. 012, no. 037 (C-473), 4. Februar 1988 (1988-02-04) -& JP 62 186764 A (TOMOAKI EHAMA), 15. August 1987 (1987-08-15)

## Beschreibung

Die Erfindung betrifft Fleischwaren, insbesondere Wurstwaren, die in einer Menge von 0,001 bis vorzugsweise 5 Gew.-%, bezogen auf den Fleischanteil, Coffein enthalten.

In der Nahrungsmittelindustrie wurden in den letzten Jahren völlig neue Wege beschritten, um "moderne" Lebensmittel bereitzustellen. Diese Lebensmittel zielen zum einen oftmals auf eine besonders gute Ernährungsweise ab, zum anderen werden damit Bedürfnisse der jungen, aktiven Generation angesprochen. Ein typischer Vertreter der letztgenannten Kategorie sind beispielsweise Taurin-haltige Getränke.

US 4,844,925 beschreibt ein Verfahren zur Verhinderung der Bildung von N-Nitrosaminen in Nitrit-gepökelten Nahrungsmitteln. Dazu wird ausgeführt, dass die zur Haltbarmachung verwendeten Nitritpökelsalze mit sekundären Aminen reagieren, wobei N-Nitrosamine gebildet werden, die als potenzielle Karzinogene betrachtet werden. Durch die Verwendung eines speziell gewonnenen Tee-Extraktes, welches dem Nitritpökelsalz vor der Pökelung der Lebensmittel zugegeben wird, kann gemäß US 4,844,925 die Bildung von N-Nitrosaminen verhindert werden. Die Wirkung des Tee-Extraktes wird den Phenolverbindungen im Tee zugeschrieben.

KR 2002 042794 beschreibt ein Verfahren zur Herstellung eines Hühnchenfleischproduktes unter Verwendung eines gefriergetrockneten Grüntee-Produkts, wobei das Hähnchenfleischprodukt hervorragend im Geschmack sein soll und gleichzeitig eine gewichtsvermindernde Wirkung sowie eine absenkende Wirkung auf den Cholesterinspiegel und auf den Fettgehalt im Blut haben soll.

WO 01 /62107 beschreibt eine ein verflüssigbares Fett enthaltende Würzmischung für die Lebensmittelindustrie mit einem hohen Salzanteil. Diese Würzmischung kann beispielsweise verwendet werden, um Geflügel schnell und in großen Mengen zu würzen. Neben essenziellen Bestandteilen kann die Würzmischung gemäß D1 weitere Bestandteile enthalten, insbesondere Aromastoffe, wie bespielsweise Tee oder Kaffeearoma.

DE 202 05 856 beschreibt einen Wellness- und Vitalbrotaufstrich, welchem Zusätze, Mineralstoffe, Vitamine, Pflanzenauszüge, wie z.B. Taurin, Koffein, Guarana, Lecithin, Tyrosin, Zink, Chrom, Calcium, Magnesium, L-Carnitin, Vitamin A + C + E, Aminosäuren, BCAA, Echinacea, Melatonin in verschiedenen Kombinationen beigefügt sein können.

Eine Aufgabe der Erfindung war es, Fleischwaren bereitzustellen, die vom Verbraucher als "modernes" Nahrungsmittel akzeptiert werden.

Diese Aufgabe wird erfindungsgemäß gelöst durch Fleischwaren, welche, bezogen auf den Fleischanteil, mindestens 0,001 bis vorzugsweise 5 Gew.-% Coffein enthalten, wobei es sich bei der Fleischware um Rohwurst oder Brühwurst handelt.

Es wurde überraschenderweise festgestellt, dass durch Zugabe von Coffein zu Fleischwaren ein Nahrungsmittel erhalten werden kann, das hervorragend im Geschmack ist und gleichzeitig den modernen Menschen die erforderliche Energie und Aktivität verleiht. Solche Coffein-haltigen Fleischwaren eignen sich deshalb hervorragend als Energie-Snacks. In den Fleischwaren ist bereits Vitamin B und Eiweiß enthalten. Durch die Zugabe des Coffeins wird somit ein Energie lieferndes aktivierendes Lebensmittel bereitgestellt.

Wie hierin verwendet umfasst der Begriff "Fleisch" alle Arten von Fleisch, insbesondere Rind- und Schweinefleisch aber auch Geflügel, wie etwa Hühnchen und Pute. Der Begriff "Fleischwaren" umfasst neben gewürzten Fleischarten und Zubereitungen auch Wurstwaren. Eine Fleischmasse gemäß der vorliegenden Erfindung besteht somit aus gegebenenfalls zerkleinertem Fleisch sowie gegebenenfalls aus bei der Verwurstung üblicherweise hinzugegebenen Bindemitteln, Gewürzen u.dgl.

Die Menge an Coffein beträgt mindestens 0,001 Gew.-%, insbesondere mindestens 0,01 Gew.-%, mehr bevorzugt mindestens 0,02 Gew.-% und besonders bevorzugt mindestens 0,05 Gew.-%, bezogen auf den Fleischanteil.

Die Menge an Coffein kann bevorzugt zwischen 0,001 und 5 Gew.-%, bezogen auf den Fleischanteil, insbesondere von 0,01 bis 1 Gew.-% und mehr bevorzugt von 0,02 bis 0,1 Gew.-% betragen. Besonders bevorzugt ist das Coffein in einer Menge von 50 mg bis 250 mg, insbesondere von 100 mg bis 150 mg pro Portion (von 50 g) enthalten, was einer Menge von 1 g bis 5 g, insbesondere 2 g bis 3 g Coffein pro 1 kg Fleischware entspricht.

Weiterhin besonders bevorzugt sind Ausführungsformen, in denen Coffein in einer Menge von 5 mg bis 10 mg pro Portion (von 10 g) enthalten sind, was einer Menge von 500 mg bis 1 kg Coffein pro 1 kg Fleischware entspricht.

Das Coffein kann als Coffein-Pulver zugesetzt werden. In einer bevorzugten Ausführungsform werden coffeinhaltige Substanzen oder Extrakte eingesetzt, insbesondere Tee, Guarana oder/und Kaffee. Der Zusatz von Kaffee bzw. Kaffeeextrakt als Coffeinquelle ist besonders bevorzugt. Pro Kilogramm Fleischerzeugnis werden vorzugsweise 30 g bis 150 g, insbesondere 50 g bis 70 g Guarana zugesetzt. Bei Verwendung von Kaffeeextraktpulver werden vorzugsweise 40 g bis 200 g, insbesondere 50 g bis 90 g pro kg Fleischerzeugnis eingesetzt.

In einer bevorzugten Ausführungsform enthalten die erfindungsgemäßen Fleischwaren neben Coffein weiterhin Taurin. Der Gehalt an Taurin beträgt vorzugsweise 0,001 bis 5, insbesondere 0,01 bis 1 und mehr bevorzugt 0,04 bis 0,1 Gew.-%, bezogen auf den Fleischanteil. Ebenfalls sehr bevorzugt ist ein Gehalt an Taurin von 0,2 bis 0,5 Gew.-%. Bevorzugt ist ein Taurinzusatz. Das Taurin kann geeigneterweise als im Pökelsalz oder in der Gewürzmischung enthaltend zugegeben werden. Taurin wird besonders bevorzugt in einer Menge von 10 mg bis 300 mg, insbesondere 200 mg bis 290 mg pro kg Fleischware zugesetzt. In dieser Menge hat Taurin eine zusätzliche geschmackbeeinflussende Wirkung.

In einer weiteren bevorzugten Ausführungsform wird Taurin in einer solchen Menge zugesetzt, dass die erfindungsgemäßen fleischwaren einen Gehalt an Taurin, bezogen auf den Fleischanteil von mindestens 0,6 Gew.-%, insbesondere mindestens 0,7 Gew.-%, bevorzugt mindestens 0,8 Gew.-%, mehr bevorzugt mindestens 0,9 Gew.-%, noch mehr bevorzugt mindestens 1 Gew.-% und am meisten bevorzugt mindestens 2 Gew.-% aufweisen.

In einer weiteren Ausführungsform wird Taurin besonders bevorzugt in einer Menge von 0,5 g, insbesondere von 1 g bis 50 g, noch mehr bevorzugt von 2 g bis 4 g pro kg Fleischware zugesetzt. Die erfindungsgemäße Fleischware enthält somit vorzugsweise mindestens 0,5 g, mehr bevorzugt mindestens 1 g mehr Taurin pro kg Fleischware als ohne diesen Zusatz.

Um den Anforderungen an ein modernes Nahrungsmittel gerecht zu werden, handelt es sich bei den erfindungsgemäßen Fleischwaren bevorzugt um fettarme Fleischwaren, die trotz ihres geringen Fettgehalts wohlschmeckend sind. Solche Fleischwaren weisen bevorzugt einen Fettgehalt von weniger als 30 Gew.-%, insbesondere weniger als 20 Gew.-% und noch mehr bevorzugt von weniger als 15 Gew.-% auf. Es ist aber auch möglich, erfindungsgemäße Fleischwaren mit einem Fettgehalt von weniger als 10 Gew.-%, mehr bevorzugt von weniger als 5 %, insbesondere von weniger als 3 % und am meisten bevorzugt von weniger als 1 % bereitzustellen. Besonders bevorzugt ist ein Fettgehalt von ≤ 14 Gew.-%, insbesonderte ≤ 12 Gew.-%, mehr bevorzugt ≤ 10 Gew.-% und noch mehr bevorzugt ≤ 8 Gew.-%. Bei Fleischwaren, die im Wesentlichen aus Rindfleisch hergestellt werden, können Fettgehalte von weniger als 4 Gew.-% und sogar von weniger als 3,5 Gew.-% erreicht werden. Bei Fleischwaren im Wesentlichen aus Schweinefleisch, kann ein Fettgehalt von weniger als 3 Gew.-% und bevorzugt von weniger als 2,5 Gew.-% erzielt werden.

Erfindungsgemäß bevorzugt handelt es sich bei der Fleischware um Rohwurst oder Brühwurst. Rohwurst besteht aus Muskelfleisch, Speck und Gewürzen und wird durch pökeln, salzen oder/und räuchern und trocknen haltbar gemacht. Brühwurst wird aus rohem, zerkleinertem Muskelfleisch und Fettgewebe sowie Gewürzen hergestellt. Diesem Fleisch wird Wasser (z.B. in Form von Eis im Kutter) zugesetzt und die fertigen Würste werden erhitzt, eben gebrüht. Dadurch verbindet sich das enthaltene Eiweiß und die Wurst wird schnittfest.

Besonders bevorzugt handelt es sich erfindungsgemäß um eine Brühwurst, insbesondere nach Art einer Cabanossi heißgegart.

Die erfindungsgemäßen Wurstwaren können weiterhin übliche Gewürze, Bindemittel und andere in der Herstellung von Fleischwaren übliche Zusatzund Hilfsmittel enthalten. Beispiele für weitere Zusätze sind Gemüse, wie etwa Paprika, Zwiebeln, Pilze, Senfkörner, Pistazien u.dgl. Ein Beispiel für Bindemittel sind Phosphate. Geeignete Gewürzmischungen umfassen beispielsweise Speisesalz, Gewürze, Gewürzextrakte, Würze, Glucose oder/und Lactose sowie gegebenenfalls Geschmacksverstärker, wie z.B.

E621. Vorteilhafterweise enthält die Gewürzmischung ein Bierhefeautolysat, welches durch Autolyse von Hefezellen gewonnen werden kann (siehe WO 00/59319).

Die erfindungsgemäßen Fleischwaren können auf einfache Weise durch Zusammenmischen der oben angegebenen Bestandteile hergestellt werden.

Die folgende Rezeptur soll die Erfindung beispielhaft erläutern.

### Beispiel 1

### Energie-Snack-Breaker

5 kg Schweinefleisch (z.B. von der Schulter) werden zerkleinert und mit 2,5 g Coffein, gegebenenfalls 2,5 g Taurin, gegebenenfalls 2,0 g Fenchel, gegebenenfalls 4,0 g Paprika, 100 g Salz, 60 g Gewürzgrundlage und 5,0 g Phosphat gut durchmischt. Die daraus hergestellten Würste wiesen einen hervorragenden Geschmack auf und lieferten die gewünschte Energie und Aktivität.

### Beispiel 2

Es wird eine Wurst nach Art einer Cabanossi heißgegart aus Schweinefleisch (ca. 90 %, wobei für 100 g Produkt 150 g Fleisch eingesetzt werden), Trinkwasser, jodiertes Speisesalz, Stärke, Milchhefe, Gewürze, Gewürzextrakte, Zuckerstoffe, Hefeautolysat, Speisewürze, Koffein oder Kaffeextrakt, Taurin und Ascorbinsäure hergestellt.

### Beispiel 3

Es wird eine Wurst nach Art einer Cabanossi heißgegart aus Schweinefleisch (ca. 90 %, wobei für 100 g Produkt 150 g Fleisch eingesetzt werden), Trinkwasser, jodiertes Speisesalz, Stärke, Milchhefe, Gewürze, Gewürzextrakte, Zuckerstoffe, Hefeautolysat, Speisewürze, Guarana, Taurin und Ascorbinsäure hergestellt.

### Beispiel 4

Die gemäß Beispiel 3 hergestellte Wurst wurde wie folgt analysiert:

| Chemische Untersuchunqen: | | |
|---|---|---|
| Wassergehalt | LMBG §35 L06.00-3 mod. | 50,9 g/100 g |
| Fettgehalt | LDHA 036 - Soxhlet-Verfahren | 7,0 g/100 g |
| Asche | LMBG §35 L06.00-4 mod. | 4,9 g/100 g |
| organisches | | |
| Nichtfett (ONF) | berechnet | 37,2 g/100 g |
| Rohprotein | LMBG §35 L06.00-7 mod. | 31,2 g/100 g |
| Bindegewebs- | | |
| eiweiß | LMBG §35 L06.00-8 mod. | 1,97 g/100 g |
| BEFFE | berechnet | 29,2 g/100 g |
| BEFFE im | | |
| Fleischeiweiß | berechnet | 93,7/100 g |
| Fett: Rohprotein | berechnet | 0,2 : 1 |
| Wasser: Roh- | | |
| protein | berechnet | 1,6 : 1 |
| Fremdwasser | berechnet | 0 g/100 g |
| Gesamtballast- | | |
| stoffe | LMBG §35 L00.00-18 | 5,5 g/100 g |
| Kohlenhydrate | berechnet | 0,5 g/100 g |
| Physiologischer | | |
| Brennwert/100 g | | 798 kJ |
| | | 190 kcal |
| Coffein | LMBG §35 L48.00-3 | 72,40 mg/100 g |
| Taurin | AOAC 999,12 (1999) | 314 mg/100 g |

## Patentansprüche

1. Fleischware,
**dadurch gekennzeichnet,**
**dass** sie mindestens 0,001 Gew.-% Coffein, bezogen auf den Fleischanteil, enthält und dass es sich um Rohwurst oder Brühwurst handelt.

2. Fleischware nach Anspruch 1,
**dadurch gekennzeichnet,**
**dass** sie 0,001 Gew.-% bis 5 Gew.-% Coffein, bezogen auf den Fleischanteil, enthält.

3. Fleischware nach Anspruch 1 oder 2,
**dadurch gekennzeichnet,**
**dass** sie mindestens 0,01 Gew.-% Coffein, bezogen auf den Fleischanteil, enthält.

4. Fleischware nach einem der vorhergehenden Ansprüche,
**dadurch gekennzeichnet,**
**dass** sie 0,01 Gew.-% bis 1 Gew.-% Coffein, bezogen auf den Fleischanteil, enthält.

5. Fleischware nach Anspruch 1 oder 2,
**dadurch gekennzeichnet,**
**dass** sie 50 mg bis 1 g Koffein pro kg Fleischware enthält.

6. Fleischware nach einem der vorhergehenden Ansprüche,
**dadurch gekennzeichnet,**
**dass** das Coffein in Form von reinem Coffeinpulver, Guarana, Kaffee oder/und Kaffeeextrakt zugegeben ist.

7. Fleischware nach einem der vorhergehenden Ansprüche,
**dadurch gekennzeichnet,**
**dass** sie weiterhin mindestens 0,001 Gew.-%, insbesondere mindestens 0,01 Taurin, bezogen auf den Fleischanteil, enthält.

8. Fleischware nach einem der vorhergehenden Ansprüche,
**dadurch gekennzeichnet,**
**dass** sie weiterhin 0,001 Gew.-% bis 5 Gew.-%, insbesondere 0,01 bis 1 Gew.-% Taurin, bezogen auf den Fleischanteil, enthält.

9. Fleischware nach einem der vorhergehenden Ansprüche,
**dadurch gekennzeichnet,**
**dass** sie 10 mg bis 4 g Taurin pro kg Fleischware zugesetzt enthält.

10. Fleischware nach einem der vorhergehenden Ansprüchen,
**dadurch gekennzeichnet,**
**dass** sie weiterhin mindestens 0,6 Gew.-%, insbesondere mindestens 0,8 Gew.-% und bevorzugt mindestens 1Gew.-% Taurin, bezogen auf den Fleischanteil, enthält.

11. Fleischware nach Anspruch 10,
**dadurch gekennzeichnet,**
**dass** sie mindestens 6 g, insbesondere mindestens 8 g Taurin pro kg Fleischware enthält.

12. Fleischware nach einem der vorhergehenden Ansprüche,
**dadurch gekennzeichnet,**
**dass** sie einen Fettgehalt von weniger als 30 Gew.-%, insbesondere von weniger als 10 Gew.-% aufweist.

13. Fleischware nach einem der vorhergehenden Ansprüche,
**dadurch gekennzeichnet,**
**dass** die Fleischware im Wesentlichen aus Rindfleisch besteht und einen Fettgehalt von weniger als 3,5 Gew.-% aufweist. -

14. Fleischware nach einem der Ansprüche 1 bis 12,
**dadurch gekennzeichnet,**
**dass** sie im Wesentlichen aus Schweinefleisch besteht und einen Fettgehalt von weniger als 2 Gew.-% aufweist.

15. Fleischware nach einem der Ansprüche 1 bis 12,
**dadurch gekennzeichnet,**
**dass** sie im Wesentlichen aus Putenfleisch besteht und einen Fettgehalt von weniger als 2 Gew.-% aufweist.

16. Fleischware nach einem der vorhergehenden Ansprüche, weiterhin enthaltend eine Gewürzmischung, umfassend einen oder mehrere der folgenden Bestandteile Salz, Glucose, Lactose, Fenchel, Paprika, Bierhefeautolysat oder/und Phoshpat.

## Claims

1. A meat product,
**characterised in that** it contains at least 0.001 % by weight of caffeine, in relation to the meat component, and **in that** it is a raw sausage or a boiling sausage.

2. A meat product according to Claim 1,
**characterised in that** it contains 0.001 % by weight to 5 % by weight of caffeine, in relation to the meat component.

3. A meat product according to Claim 1 or 2 ,
**characterised in that** it contains at least 0.01 % by weight of caffeine, in relation to the meat component.

4. A meat product according to any one of the preceding Claims,
**characterised in that** it contains 0.01 % by weight to 1 % by weight of caffeine, in relation to the meat component.

5. A meat product according to Claim 1 or 2,
**characterised in that** it contains 50 mg to 1 g of caffeine per kg of meat product.

6. A meat product according to any one of the preceding Claims,
**characterised in that** the caffeine is added in the form of pure caffeine powder, guarana, coffee and/or coffee extract.

7. A meat product according to any one of the preceding Claims,
**characterised in that** it further contains 0.001 % by weight, in particular at least 0.01 [sic] taurine, in relation to the meat component.

8. A meat product, according to any one of the preceding Claims,
**characterised in that** it further contains 0.001 % to 5 % by weight, in particular 0.01 to 1 % by weight of taurine, in relation to the meat component.

9. A meat product according to any one of the preceding Claims,
**characterised in that** it contains an addition of 10 mg to 4 g of taurine per kg of meat product.

10. A meat product according to any one of the preceding Claims,
**characterised in that** it further contains at least 0.6 % by weight, in particular at least 0.8 % by weight, and preferably at least 1 % by weight of taurine, in relation to the meat component.

11. A meat product according to Claim 10,
**characterised in that** it contains at least 6 g, in particular at least 8 g of taurine per kg of meat product.

12. A meat product according to any one of the preceding Claims,
**characterised in that** it has a fat content of less than 30 % by weight, in particular of less than 10 % by weight.

13. A meat product according to any one of the preceding Claims,
**characterised in that** the meat product consists substantially of beef and has a fat content of less than 3.5 % by weight.

14. A meat product according to any one of Claims 1 to 12,
**characterised in that** it consists substantially of pork and has a fat content of less than 2 % by weight.

15. A meat product according to any one of Claims 1 to 12,
**characterised in that** it consists substantially of turkey meat and has a fat content of less than 2 % by weight.

16. A meat product according to any one of the preceding Claims, further containing a mixed herb seasoning, comprising one or more of the following ingredients: salt, glucose, lactose, fennel, paprika, brewer's yeast autolysate and/or phosphate.

## Revendications

1. Produit à base de viande, **caractérisé en ce qu'**il contient au moins 0,001 % en poids de caféine, par rapport à la teneur en viande, et **en ce qu'**il s'agit de saucisse crue ou de saucisse à cuire.

2. Produit à base de viande selon la revendication 1, **caractérisé en ce qu'**il contient de 0,001 % en poids à 5 % en poids de caféine, par rapport à la teneur en viande.

3. Produit à base de viande selon la revendication 1 ou 2, **caractérisé en ce qu'**il contient au moins 0,01 % en poids de caféine, par rapport à la teneur en viande.

4. Produit à base de viande selon l'une quelconque des revendications précédentes, **caractérisé en ce qu'**il contient de 0,01% en poids à 1 % en poids de caféine par rapport à la teneur en viande.

5. Produit à base de viande selon la revendication 1 ou 2, **caractérisé en ce qu'**il contient de 50 mg à 1 g de caféine par kg de produit à base de viande.

6. Produit à base de viande selon l'une quelconque des revendications précédentes, **caractérisé en ce que** la caféine est ajoutée sous la forme de poudre de caféine, de guarana, de café ou/et d'extrait de café purs.

7. Produit à base de viande selon l'une quelconque des revendications précédentes, **caractérisé en ce qu'**il contient en outre au moins 0,001 % en poids, en particulier au moins 0,01 % en poids de taurine, par rapport à la teneur en viande.

8. Produit à base de viande selon l'une quelconque des revendications précédentes, **caractérisé en ce qu'**il contient en outre de 0,001 % en poids à 5 % en poids, en particulier de 0,01 à 1 % en poids de taurine, par rapport à la teneur en viande.

9. Produit à base de viande selon l'une quelconque des revendications précédentes, **caractérisé en ce qu'**il contient de 10 mg à 4 g ajoutés de taurine par kg de produit à base de viande.

10. Produit à base de viande selon l'une quelconque des revendications précédentes, **caractérisé en ce qu'**il contient en outre au moins 0,6 % en poids, en particulier au moins 0,8 % en poids et de préférence au moins 1 % en poids de taurine, par rapport à la teneur en viande.

11. Produit à base de viande selon la revendication 10, **caractérisé en ce qu'**il contient au moins 6 g, en particulier au moins 8 g de taurine par kg de produit à base de viande.

12. Produit à base de viande selon l'une quelconque des revendications précédentes, **caractérisé en ce qu'**il présente une teneur en matières grasses de moins de 30 % en poids, en particulier de moins de 10 % en poids.

13. Produit à base de viande selon l'une quelconque des revendications précédentes, **caractérisé en ce que** le produit à base de viande se compose essentiellement de viande de boeuf et présente une teneur en matières grasses de moins de 3,5 % en poids.

14. Produit à base de viande selon l'une quelconque des revendications 1 à 12, **caractérisé en ce qu'**il se compose essentiellement de viande de porc et présente une teneur en matières grasses de moins de 2 % en poids.

15. Produit à base de viande selon l'une quelconque des revendications 1 à 12, **caractérisé en ce qu'**il se compose essentiellement de viande de dinde et présente une teneur en matières grasses de moins de 2 % en poids.

16. Produit à base de viande selon l'une quelconque des revendications précédentes, contenant en outre un mélange d'aromates, comprenant un ou plusieurs des constituants suivants : sel, glucose, lactose, fenouil, paprika, autolysat de levure de bière et/ou phosphate.
